# EUROPÄISCHE PATENTSCHRIFT

(11) **EP 2 615 775 B1**
(45) Veröffentlichungstag und Bekanntmachung des Hinweises auf die Patenterteilung: **03.08.2016**
(21) Anmeldenummer: 13150684.2
(22) Anmeldetag: 09.01.2013
(51) Int. Cl.: H04L 12/24

(54) **Verfahren zum Pflegen einer Konfigurationsrechnereinrichtung sowie Konfigurationsrechnereinrichtung**
Method for maintaining a configuration computer device and configuration computer device
Procédé d'entretien d'un dispositif de calcul de configuration et dispositif de calcul de configuration

(30) Priorität: 12.01.2012 DE 102012000454
(43) Veröffentlichungstag der Anmeldung: 17.07.2013
(73) Patentinhaber: Vodafone GmbH, 40549 Düsseldorf (DE)
(72) Erfinder: Hying, Thomas, 40547 Düsseldorf (DE)
(74) Vertreter: Müller & Schubert

(56) Entgegenhaltungen:
- EP-A1- 2 180 758
- EP-A1- 2 369 787
- WO-A1-2005/107217
- AU-A1- 2010 244 906
- "OMA Device Management Bootstrap ; OMA-TS-DM_Bootstrap-V1_3-20081110-D", OMA-TS-DM_BOOTSTRAP-V1_3-20081110-D, OPEN MOBILE ALLIANCE (OMA), 4330 LA JOLLA VILLAGE DR., SUITE 110 SAN DIEGO, CA 92122 ; USA , Nr. 1.3 10. November 2008 (2008-11-10), Seiten 1-28, XP064072168, Gefunden im Internet: URL:ftp/Public_documents/DM/Permanent_docu ments/ [gefunden am 2008-11-10]
- "Provisioning Bootstrap ; OMA-WAP-TS-ProvBoot-V1_1-20090728-A", OMA-WAP-TS-PROVBOOT-V1_1-20090728-A, OPEN MOBILE ALLIANCE (OMA), 4330 LA JOLLA VILLAGE DR., SUITE 110 SAN DIEGO, CA 92122 ; USA , Nr. 1.1 28. Juli 2009 (2009-07-28), Seiten 1-22, XP064072292, Gefunden im Internet: URL:ftp/Public_documents/DM/Permanent_docu ments/ [gefunden am 2009-08-20]

## Beschreibung

Die vorliegende Erfindung betrifft zunächst ein Verfahren zum Pflegen einer einem Netzwerk zugeordneten Konfigurationsrechnereinrichtung gemäß dem Oberbegriff von Patentanspruch 1. Weiterhin betrifft die Erfindung auch eine Konfigurationsrechnereinrichtung gemäß dem Oberbegriff von Patentanspruch 12.

In Zeiten, in denen sich so genannte Smartphones immer größerer Beliebtheit erfreuen, wird die Nutzung von Datendiensten über mobile Endgeräte immer populärer. Damit diese Endgeräte auf Datendienste zugreifen können, beispielsweise Internet browsen, E-Mails sowie MMS empfangen und versenden, müssen die betreffenden Endgeräte-Clients, zum Beispiel Browser-, E-Mail-, oder MMS-Clients, mit den entsprechenden Settings konfiguriert sein.

Die von einem Netzbetreiber vermarkteten Geräte sind in der Regel für diese Datendienste vorkonfiguriert. Endgeräte von Nutzern, die diese von einem Netzbetreiber zu einem anderen Netzbetreiber wechseln, oder die diese im offenen Markt erworben haben, sind nicht für Datendienste des betreffenden Netzbetreibers vorkonfiguriert.

Die einfachste Art, ein Endgerät mit Serversettings zu provisionieren, was insbesondere bedeutet, dass diese Serversettings für das Endgerät beschafft oder verfügbar gemacht werden, ist das von OMA (Open Mobile Alliance) standardisierte OMA Client Provisioning. Die Settings werden hier per SMS (Short Message Service) an das Endgerät gesendet und können aus dieser im Endgerät installiert werden. Zur Kodierung der Settings verwendet OMA CP XML-Files. Diese werden vor dem Versenden via SMS in WBXML transformiert. Bei der Installation im Endgerät läuft dieser Prozess umgekehrt.

XML ist ein offener Standard. Die Endgeräte-Hersteller sind hier frei, neue Charakteristika oder Parameter zur Provisionierung ihrer Endgeräte einzuführen und zu verwenden. Jedoch zeigt die Praxis, dass sich etwa 80% der Endgeräte mit denselben XML Files erfolgreich provisionieren lassen.

Für die Fälle, in denen eine solche Provisionierung nicht funktioniert, gibt es folgende Möglichkeiten: Das passende XML-File wird vom Hersteller an den Netzbetreiber/ OMA CP Server Betreiber mitgeliefert; es bedarf der Entwicklungstätigkeit des OMA CP Server Betreibers, um die korrekten XML-Files zu erstellen und ein passendes Profil für das Endgerät auf dem OMA CP Server zu hinterlegen. Grundvoraussetzung zur Entwicklung der passenden XML-Files ist, dass dem Entwickler das Endgerät vorliegt.

Die XML-File Entwicklung kann somit nur für Endgeräte erfolgen, die beim Netzbetreiber physikalisch vorliegen. Das sind in der Regel nur solche Endgeräte, die vom Netzbetreiber getestet und vermarktet werden. Alle anderen Endgeräte können vom OMA CP Server bislang nicht unterstützt werden.

Im Stand der Technik ist bereits eine Reihe von Lösungen bekannt geworden, bei denen Endgeräte konfiguriert werden können. So wird mit der DE 10 2004 041 167 A1 beispielsweise ein Verfahren zum Konfigurieren einer Teilnehmerstation eines Kommunikationsnetzes vorgeschlagen, wobei eine Teilnehmerstation durch eine Übertragung von Konfigurationsdaten auf einen gezielten Wechsel zu einem anderen Netz der gleichen oder einer verschiedenen Technologie
vorbereitet werden soll. Diese Lösung beschreibt einzig die Konfiguration eines Endgeräts. Es wird dabei jedoch keine Überprüfung vorgenommen, ob die Konfiguration des Endgeräts erfolgreich war. Auch kann die Konfigurationsrechnereinrichtung nicht um Konfigurationsdaten von Endgeräten, die dem Netzwerk zunächst nicht bekannt waren, erweitert werden.

Auch die DE 10 2004 036 991 A1 betrifft ein Konfigurieren eines Mobilterminals bei einem Wechsel von einem Mobilfunknetz in ein anderes. Diese Lösung beschreibt die Konfiguration und Rekonfiguration eines Endgeräts für verschiedene Netzwerke. Auch hier kann die Konfigurationsrechnereinrichtung nicht um Konfigurationsdaten von Endgeräten, die dem Netzwerk zunächst nicht bekannt waren, erweitert werden. Andere im Stand der Technik bekannte Lösungen beschäftigen sich mit dem Management mobiler Endgeräte. In der US 2008/0070495 A1 ist eine Lösung beschrieben, mittels derer eine Vielzahl von mobilen Endgeräten mit variierenden Plattformen durch eine einzige Managementapplikation gemanagt werden können. Die US 2009/0044185 A1 offenbart ein Workflow-basiertes Nutzer-Schnittstellensystem, um damit mobile Endgeräte zu managen.

In der EP 1515571 A2 wird eine Lösung für eine OMA DM Erweiterung beschrieben. Es ist offenbart, wie man nicht standardisierte, herstellerspezifische Konfigurationsadaten via OMA Devicemanagement (OMA DM) als Managed Objects via OMA DM zu managen versucht.

Die DE 10 2004 049 611 A1 beschreibt eine Lösung zum Konfigurieren eines mobilen Endgeräts. Es wird dabei die Konfiguration einer SIM beziehungsweise eines Endgeräts via SIM OTA offenbart. SIM OTA ist in einem eigenen Standard standardisiert.

In der AU2010244906 wird ein Verfahren zum Provisionieren von Endgeräten (mobile phone) beschrieben das aus einer Kombination aus einer OMA CP (Client Provisioning) Provisionierung und einer OMA DM (Device Management) Provisionierung besteht. Die Spezifikation "OMA Device Management Bootstrap, Draft Version 1.3 (11 Nov 2008), Open Mobile Alliance" beschreibt den standardisierten Prozess der Provisionierung eines OMA DM Client, den sogenannten "Bootstraps': der OMA DM Client wird in einen Zustand überführt in dem er eine "management session" mit einem neuen Server initiieren.

Insbesondere geht es auch bei diesen beiden vorgenannten Lösungen nicht darum die Konfigurationsrechnereinrichtung um Konfigurationsdaten von Endgeräten, die dem Netzwerk zunächst nicht bekannt waren, zu erweitern.

Der vorliegenden Erfindung liegt deshalb die Aufgabe zugrunde, eine möglichst große Zahl von im Markt befindlichen Endgeräten für Datendienste eines Netzbetreibers provisionieren zu können, indem die erforderlichen Konfigurationsdaten anschließend auch einer Konfigurationsrechnereinrichtung verfügbar gemacht werden.

Diese Aufgabe wird erfindungsgemäß gelöst durch das Verfahren zum Pflegen einer Konfigurationsrechnereinrichtung mit den Merkmalen gemäß dem unabhängigen Patentanspruch 1 sowie durch die Konfigurationsrechnereinrichtung mit den Merkmalen gemäß dem unabhängigen Patentanspruch 12. Weitere Merkmale und Details der Erfindung ergeben sich aus den Unteransprüchen, der Beschreibung sowie den Zeichnungen. Offenbarungen in Bezug auf das erfindungsgemäße Verfahren gelten dabei selbstverständlich auch im Zusammenhang mit der erfindungsgemäßen Konfigurationsrechnereinrichtung, und umgekehrt.

Gemäß der vorliegenden Erfindung wird nunmehr eine Möglichkeit geschaffen, wie eine Konfigurationsrechnereinrichtung selbstlernend ausgebildet werden kann, so dass Konfigurationsdaten netzwerkseitig auf einfache und effiziente Weise auch für solche Engeräte bereitgestellt werden können, die von einem entsprechenden Netzwerkbetreiber zunächst noch nicht angeboten wurden, und für die aus den eingangs genannten Gründen netzwerkseitig deshalb noch keine Konfigurationsdaten zur Verfügung standen.

Gemäß dem ersten Aspekt der Erfindung wird ein Verfahren zum Pflegen einer einem Netzwerk, insbesondere einem Kommunikationsnetzwerk, zugeordneten Konfigurationsrechnereinrichtung, insbesondere zum Erweitern der Konfigurationsrechnereinrichtung um Konfigurationsdaten von dem Netzwerk noch unbekannten Endgeräten, bereitgestellt, wobei über die Konfigurationsrechnereinrichtung dem Netzwerk zugeordnete Endgeräte konfiguriert werden, indem von der Konfigurationsrechnereinrichtung Konfigurationsdaten an die Endgeräte übertragen werden. Das Verfahren ist erfindungsgemäß dadurch gekennzeichnet, dass das Verfahren zum selbstlernenden Pflegen der Konfigurationsrechnereinrichtung ausgebildet ist; dass Default-Konfigurationsdaten von der Konfigurationsrechnereinrichtung an ein dem Netzwerk zugeordnetes, unbekanntes Endgerät übertragen werden, wobei die Default-Konfigurationsdaten insbesondere in Form eines OMA CP Settings, insbesondere in Form eines XML-Files übertragen werden; dass ein Rückkanal, insbesondere via WAP-Push, zwischen der Konfigurationsrechnereinrichtung und dem zum zu konfigurierenden unbekannten Endgerät aufgebaut wird; dass in einem Überprüfungsschritt geprüft wird, ob die an das unbekannte Endgerät übertragenen Default-Konfigurationsdaten für das Endgerät geeignet sind; und dass im Falle, dass die im Überprüfungsschritt durchgeführte Überprüfung erfolgreich ist, die Default-Konfigurationsdaten mit das zu konfigurierende Endgerät charakterisierenden Informationen an die Konfigurationsrechnereinrichtung weitergegeben werden, beispielsweise indem diese in der Konfigurationsrechnereinrichtung abgespeichert werden, insbesondere in Form eines XML-Templates.

Bevorzugt ist vorgesehen, dass die Konfigurationsdaten mit dem TAC-Code (Type Approval Code) des zu konfigurierenden Endgeräts in der Konfigurationsrechnereinrichtung abgespeichert werden.

Das erfindungsgemäße Verfahren ist zum Pflegen einer einem Netzwerk, insbesondere einem Kommunikationsnetzwerk, zugeordneten Konfigurationsrechnereinrichtung, ausgebildet. Pflegen bedeutet dabei insbesondere, dass die Konfigurationsrechnereinrichtung eingerichtet, bearbeitet oder erweitert wird. Insbesondere soll die Konfigurationsrechnereinrichtung dahingehend gepflegt werden, dass eine Liste oder Datenbank mit für diverse Endgeräte vorgesehenen Konfigurationsdaten erstellt, überarbeitet, erweitert oder dergleichen werden kann. Bei der Konfigurationsrechnereinrichtung kann es sich beispielsweise um einen Server handeln. Ein Ausführungsbeispiel für eine bevorzugte Ausgestaltung eines solchen Servers ist im weiteren Verlauf der Beschreibung näher erläutert, wobei die Erfindung nicht auf das genannte Beispiel beschränkt ist. Bei dem Netzwerk handelt es sich bevorzugt um ein Kommunikationsnetzwerk, insbesondere um ein Mobilfunknetzwerk.

Das erdfindungsgemäße Verfahren dient insbesondere zum Erweitern der Konfigurationsrechnereinrichtung um Konfigurationsdaten von dem Netzwerk zugeordneten, unbekannten Endgeräten. Bei den Endgeräten kann es sich je nach Ausgestaltung des Netzwerks beispielsweise um mobile Endgeräte wie Mobiltelefone, insbesondere Smartphones, und dergleichen handeln.

Bei einer Konfiguration von Endgeräten in einem Netzwerk ist vorgesehen, dass über die Konfigurationsrechnereinrichtung dem Netzwerk zugeordnete Endgeräte konfiguriert werden, indem von der Konfigurationsrechnereinrichtung Konfigurationsdaten an die Endgeräte übertragen werden. In den Endgeräten werden die Konfigurationsdaten üblicherweise implementiert, so dass das Endgerät anschließend in entsprechend konfigurierter Weise betrieben werden kann. Beispielsweise kann vorgesehen sein, dass dem Endgerät durch die Konfiguration die Teilnahme an oder die Benutzung von Diensten ermöglicht wird.

Erfindungsgemäß ist nunmehr vorgesehen, dass das Verfahren zum selbstlernenden Pflegen der Konfigurationsrechnereinrichtung ausgebildet ist. Selbstlernend bedeutet dabei insbesondere, dass die Konfigurationsrechnereinrichtung - insbesondere automatisch - um Konfigurationsdaten von solchen Endgeräten erweitert wird, die der Konfigurationsrechnereinrichtung zuvor noch nicht bekannt waren. Damit wird der Umfang der der Konfigurationsrechnereinrichtung zur Verfügung stehenden Konfigurationsdaten unterschiedlichster Endgeräte stetig erweitert und angepasst. Die einmal ergänzten Konfigurationsdaten können somit später für gleiche Endgeräte, die zu einem späteren Zeitpunkt konfiguriert werden müssen, wieder verwendet werden.

Beispielsweise kann vorgesehen sein, wenn ein XML-Template und TAC-Codes verwendet werden, dass das XML File, mit dem das Endgerät erfolgreich provisioniert wurde, in der Konfigurationsrechnereinrichtung, beispielsweise einem CP Server, für den TAC-Code des Endgeräts hinterlegt wird. Identische Endgeräte werden durch ein und demselben TAC-Code klassifiziert.

Bei einer Konfiguration gemäß der vorliegenden Erfindung handelt es sich insbesondere um eine Provisionierung der Endgeräte. Generell bedeutet "provisionieren" etwas zu beschaffen oder verfügbar zu machen.

Um eine solch selbstlernende Lösung zu schaffen, ist erfindungsgemäß vorgesehen, dass zunächst Default-Konfigurationsdaten von der Konfigurationsrechnereinrichtung an ein dem Netzwerk zugeordnetes, unbekanntes Endgerät übertragen werden. Bei den Default-Konfigurationsdaten handelt es sich insbesondere um Standard-Daten oder netzwerkseitig voreingestellte Daten. Dabei ist die Erfindung grundsätzlich nicht auf bestimmte Typen von Konfigurationsdaten beschränkt.

Bevorzugt ist jedoch vorgesehen, dass die Default-Konfigurationsdaten in Form eines OMA CP Settings, insbesondere in Form eines XML-Files übertragen werden. Dabei werden Daten nach dem Open Mobile Alliance Client Provisioning Standard übertragen, der an sich bereits bekannt ist. Ein Setting ist dabei insbesondere als Synonym für Konfiguration zu verstehen. Die Übertragung der Daten erfolgt dabei bevorzugt im XML-Format. Beispielsweise kann vorgesehen sein, dass ein Default OMA CP Setting, beispielsweise ein APN, Internet/WAP, MMS, E-Mail, Mail for Exchange, SyncML Setting und dergleichen auf das Endgerät übertragen und in diesem empfangen wird.

Diese Default-Konfigurationsdaten werden insbesondere im Endgerät implementiert, wodurch das Endgerät provisioniert wird.

Nunmehr ist erfindungsgemäß vorgesehen, dass ein Rückkanal, insbesondere via WAP-Push, zwischen der Konfigurationsrechnereinrichtung und dem zu konfigurierenden Endgerät initiiert wird. Nachfolgend wird dieser Rückkanal in größerem Detail beschrieben.

Dabei ist vorgesehen, dass der Rückkanal zwischen der Konfigurationsrechnereinrichtung und dem zum zu konfigurierenden - unbekannten - Endgerät initiiert wird. Der Rückkanal ermöglicht insbesondere den bidirektionalen Kontakt zwischen der Konfigurationsrechnereinrichtung und dem Endgerät. Der Rückkanal umfasst insbesondere die Überprüfung, ob die im Endgerät installierte Konfiguration erfolgreich war.

Bevorzugt ist vorgesehen, dass der Rückkanal via WAP-Push, auf Basis der WAP-Push-Technologie ausgebildet ist. WAP-Push ist insbesondere eine Möglichkeit, Inhalte von der Konfigurationsrechnereinrichtung zu den Endgeräten zu verteilen. Die Inhalte werden dabei insbesondere ohne Initiative seitens des Endgeräts von der Konfigurationsrechnereinrichtung auf das Endgerät geschoben, gepusht. Die Konfigurationsrechnereinrichtung übernimmt daher die Initiative der Übertragung.

Erfindungsgemäß ist im Rahmen des Rückkanals vorgesehen, dass in einem Überprüfungsschritt geprüft wird, ob die an das - unbekannte - Endgerät übertragenen Konfigurationsdaten für das Endgerät geeignet sind, beispielsweise ob die an das Endgerät übertragenen Konfigurationsdaten erfolgreich im Endgerät implementiert wurden. Dies kann auf unterschiedlichste Weise erfolgen, so dass die Erfindung nicht auf konkrete Ausführungen beschränkt ist. Einige bevorzugte, jedoch nicht ausschließliche Beispiele werden im weiteren Verlauf der Beschreibung näher erläutert.

Schließlich werden im Falle, dass die im Überprüfungsschritt durchgeführte Überprüfung erfolgreich ist, im Rahmen des Rückkanals die Default-Konfigurationsdaten mit das zu konfigurierende - unbekannte- Endgerät charakterisierenden Informationen, beispielsweise dem TAC-Code an die Konfigurationsrechnereinrichtung weitergegeben und bevorzugt in der Konfigurationsrechnereinrichtung abgespeichert. Somit kann die Konfigurationsrechnereinrichtung später gleiche Endgeräte mit gesicherten Konfigurationsdaten versorgen. Bevorzugt ist vorgesehen, dass die Konfigurationsdaten in Form eines XML-Templates, beispielsweise unter dem entsprechenden Gerätenamen, als Profil abgelegt werden.

Der Rückkanal gemäß der vorliegenden Erfindung umfasst somit grundsätzlich die folgenden Abläufe:
a) Netzwerkseitiges Versenden einer Information durch ein Netzelement;
b) Erhalt der Information durch das Endgerät;
c) dass durch die Konfigurationsrechnereinrichtung adressierte Endgeräte bearbeitet selbständig die empfangene Information;
d) die erfolgreiche Bearbeitung der Information wird durch das zuvor provisionierte Endgerät netzwerkseitig detektiert.
e) die Information über die erfolgreiche Bearbeitung der Information wird an die Konfigurationsrechnereinrichtung weitergegeben.

Der Rückkanal umfasst somit die durchgeführte Überprüfung des zuvor provisonierten Endgeräts und die Weitergabe der Information über die erfolgreiche Überprüfung an die Konfigurationsrechnereinrichtung.

Bevorzugt basiert der Rückkanal auf der WAP-Push Technologie.

Eine WAP Push Message initiiert beim zu konfigurierenden Endgerät eine automatisches Öffnen eines PDP Contextes (Packet Data Protocol Context) des betreffenden Endgeräte-Clients, beispielsweise einen automatischen MMS Download, ein automatisches Öffnen einer Internetseite im Browser (SL Indication (Service Load)), eine automatische Synchronisation mit dem SyncML Server (Server alerted Sync), eine automatische Synchronisation der E-Mails (z.B. OMA EMN), oder dergleichen. Beispielsweise bewirkt eine WAP Push Message mit der Service Indication SL (Service Load), dass das Endgerät unmittelbar nach Erhalt dieser Message einen PDP Context aufbaut und die in der Message enthaltene Url. z.B. "http://www.vodafone.de" öffnet.

Der Rückkanal umfasst in diesem Falle
a. Versenden der WAP Push Message durch ein netzwerkseitiges Netzelement;
b. Erhalt der WAP Push Message durch das Endgerät;
c. Der durch die WAP Push Message adressierte Endgeräte Client, beispielsweise Browser, MMS, SyncML Client, E-Mail Client, öffnet selbsttätig den PDP Context;
d. Der erfolgreichen Aufbau des PDP-Contextes durch das zuvor provisionierte Endgerät wird vom Netzelement, zum Beispiel einem WAP Gateway, detektiert;
e. Die Information über den erfolgreichen Aufbau des PDP Contextes wird an die Konfigurationsrechnereinrichtung, beispielsweise einen CP Server, weitergegeben.

Die Information über die erfolgreiche End-To-End Überprüfung des provisionierten Endgeräts nutzt die Konfigurationsrechnereinrichtung, um das verwendete Default Profil, für charakteristische Informationen des Endgeräts, beispielsweise für den TAC Code des provisionierten Endgerätes, zu hinterlegen. Der Rückkanal umfasst somit die durch WAP Push initierte End-to-End Überprüfung des zuvor provisonierten Endgeräts und die Weitergabe der Information über die erfolgreiche End-to-End Funktionalität an die Konfigurationsrechnereinrichtung.

Mit dem erfindungsgemäßen Verfahren kann insbesondere erreicht werden, Settings auch für die Endgeräte verfügbar zu machen, die nicht vom Netzwerkbetreiber vermarktet werden und daher zur eingangs erwähnten Serverprofil-Entwicklung, beispielsweise einem XML-File Design, physikalisch nicht zur Verfügung stehen.

Die selbstlernende Konfigurationsrechnereinrichtung, beispielsweise der CP Server, macht sich insbesondere die Tatsache zunutze, dass der Großteil der Endgeräte sich mit einer überschaubaren Anzahl von XML-Files provisionieren lässt. Das Verfahren beschreibt insbesondere einen Weg, wie unbekannten Geräten die passenden XML-Files zugeordnet werden können und diese Profile auf der Konfigurationsrechnereinrichtung hinterlegt werden.

Die selbstlernende Konfigurationsrechnereinrichtung setzt sich insbesondere zusammen aus folgenden Technologien: 1. Konfiguration eines Endgeräte Clients, beispielsweise eines Browser, MMS-, E-Mail-, SyncML-Clients, mittels Konfigurationsdaten, beispielsweise OMA CP (OMA Client Provisioninig) 2. Rückkanal, insbesondere auf Basis der WAP Push Technologie. Es ergibt sich ein vorteilhafter Effekt aus der Kombination der beiden Technologien: OMA CP ist so standardisiert, dass es sich SMS als Träger bedient. Diese Methode funktioniert aus der Netz-Sicht nach dem Fire and Forget Prinzip. Ob die Provisionierung des Terminals erfolgreich verläuft oder nicht, lässt sich netzseitig nicht unmittelbar ermitteln. Der Erfolg ist erst festellbar, nachdem der Nutzer den provisionierten Service zum ersten Mal erfolgreich genutzt hat. Der neue Effekt: Der Einsatz von WAP Push direkt im Anschluss an die Provisionierung via OMA CP, bietet die Möglichkeit unmittelbar einen "'Rückkanal" zum provisionierten Endgerät aufzubauen und damit umgehend den Erfolg der Provisionierung zu überprüfen.

Vorzugsweise können die auf das - unbekannte - Endgerät übertragenen Default-Konfigurationsdaten in dem Endgerät installiert werden, insbesondere mittels OMA Client Provisioning, nachdem die Daten vom Endgerät empfangen worden sind. Die empfangenden Daten, beispielsweise in Form eines XML-Files, werden nach dem Empfang im Endgerät installiert.

Vorzugsweise wird der Rückkanal von Seiten der Konfigurationsrechnereinrichtung zum - unbekannten - Endgerät initiiert. Aufgebaut wird der Rückkanal insbesondere durch das Endgerät. Beispielsweise kann vorgesehen sein, dass der Rückkanal vom Netzwerk durch WAP-Push initiiert wird.

Bevorzugt ist vorgesehen, dass im Überprüfungsschritt die End-to-End-Funktionalität geprüft wird und/oder dass geprüft wird, ob die in dem - unbekannten - Endgerät implementierten Konfigurationsdaten eine Datenverbindung erfolgreich öffnen und/oder dass netzwerkseitig geprüft wird, ob ein Dienst erreichbar ist und/oder dass geprüft wird, ob ein Kontext geöffnet werden kann und/oder der Zugriff auf erforderliche Netzwerkelemente erfolgreich ist und/oder ob ein Download erfolgreich ist.

Wie schon ausgeführt wurde, kann der Rückkanal zur Überprüfung dienen, ob das installierte Setting die Datenverbindung erfolgreich öffnet. Hierzu sind verschiedene Möglichkeiten denkbar, die nachfolgend in größerem Detail beschrieben werden:

Beispiel Browser: WAP Push SMS mit Service Indication "SL" (Service Load: WAP Push SMS enthält URL, die aufgrund der Serice Indication "SL" automatisch vom Browser geöffnet wird) - Die erfolgreiche Verbindung und das Öffnen der Internetseite (URL.) kann am WAP Gateway oder auch beim die URL hostenden Server ausgewertet werden.

In anderer Ausgestaltung kann aus dem http-Header des Get Requests der User Agent und das UAProf ausgelesen werden. Daraus lassen sich Geräte Name und Capabilities des Endgerätes ermitteln.

Vorzugsweise kann während des Überprüfungsschritts die Konfigurationsrechnereinrichtung eine Prüfdatei an das zu konfigurierende - unbekannte - Endgerät übertragen, beispielsweise kann dies im Zusammenhang mit MMS (Multimedia Messaging Service) erfolgen.

Vorzugsweise kann der Überprüfungsschritt netzwerkseitig in einer Überprüfungseinrichtung außerhalb der Konfigurationsrechnereinrichtung durchgeführt werden, wobei im Falle, dass die im Überprüfungsschritt durchgeführte Überprüfung erfolgreich ist, die Ergebnisse der Überprüfung an die Konfigurationsrechnereinrichtung übertragen werden. Bevorzugt kann in einem solchen Fall vorgesehen sein, dass der Überprüfungsschritt an/in einem dem Netzwerk zugeordneten WAP-Gateway oder einem dem Netzwerk zugeordneten Server durchgeführt wird.

Beispielsweise versendet der Netzbetreiber eine MMS an das provisionierte Endgerät. Ist der automatische Download erfolgreich, wird das am WAP-Gateway registriert. Beispielsweise über E-mail: Default User:$MSISDN$@vodafone.de, Default Password: "P". Download einer Willkommens-Email via WAP Push "OMA EMN". Erfolgreicher Download wird am WAP Gateway, E-Mail Server registriert. Beispielsweise über SyncML: OMA DS 1.2 supported Feature "Server initiated Sync". Nach erfolgter Provisionierung des SyncML Clients sendet der SyncML Server ("Mein Adressbuch") ein Server initiated Sync via WAP Push. Die erfolgreiche Synchronisation wird am WAP Gateway, SyncML Server, registriert.

Nachfolgend wird ein konkretes Beispiel beschrieben:

Unmittelbar im Anschluss an die Provisionierung eines Endgeräts, beispielsweise eines Clients, insbesondere via OMA CP, kann, initiiert durch die anschließend empfangene WAP Push Message, der Dienst E2E (End-to-End) überprüft werden. Diese Überprüfung der Erreichbarkeit des Dienstes, beispielsweise Internet, E-Mail, MMS und dergleichen, erfolgt dabei ohne Interaktion des Benutzers. Die Auswertung, ob der jeweilige PDP Context geöffnet werden konnte, und der Zugriff auf das entsprechende Netzelement, beispielsweise WAP-Gateway, MMS Service, E-Mail- oder SyncML-Server und dergleichen erfolgreich ist, erfolgt im Netz, beispielsweise am WAP Gateway. Das Ergebnis wird bevorzugt im Netz erfasst und an die Konfigurationsrechnereinrichtung, beispielsweise den CP Server, weitergegeben. Für den Erfolgsfall, wird das betreffende XML-File - insbesondere "gecloned" - und auf der Konfigurationsrechnereinrichtung für das neu zu unterstützende Endgerät hinterlegt. Da die Provisionierung von APN, Wap/Internet Browser und MMS erfahrungsgemäß zu 80% mit denselben Standard XML Files erfolgreich verläuft, kann die Take Rate der Kunden, die Endgeräte benutzen, die nicht vom Netzbetreiber vertrieben werden, im gleichen Maße steigen.

In anderer Ausgestaltung kann der Überprüfungsschritt in der Konfigurationsrechnereinrichtung durchgeführt werden.

Bevorzugt ist ferner, dass zu Beginn des Verfahrens die Konfigurationsrechnereinheit eine Anforderung des zu konfigurierenden - unbekannte - Endgeräts erhält. Dies kann auf unterschiedlichste Weise geschehen. Nachfolgend werden hierzu einige bevorzugte, jedoch nicht ausschließliche Beispiele beschreiben.

Beispielsweise kann vorgesehen sein, dass die Konfigurationsrechnereinheit, beispielsweise der OMA CP Server, eine Anforderung des zu konfigurierenden Endgerätes erhält, jedoch nicht von dem Endgerät selbst, das heißt durch eine eigenständige Aktion des Endgerätes ausgelöst und vom Endgerät angefordert.

Die Anforderung kann dann beispielsweise auf folgende Arten erfolgen:
a. Via ADC (Automatic Device Detection, bei VF DE: AcSA):
   Das Endgerät verwendet falsche Settings, zum Beispiel die APN eines anderen Netzbetreibers, für den Zugriff auf einen Service des aktuellen Netzanbieters. Das wird von einem ADC (Automatic Device Detection) im Netzwerk erkannt. Dieses ADC gibt die Information, dass ein falsch konfiguriertes Endgerät versucht auf das Netzwerk zuzugreifen, an die Konfigurationsrechnereinrichtung, beispielsweise den OMA CP Server, weiter. Der OMA CP Server identifiziert den Gerätetyp anhand des TAC Codes (TAC = die ersten 8 Ziffern der IMEI, die den Hersteller und den Gerätetyp eindeutig klassifizieren). Ist der TAC Code der Konfigurationsrechnereinrichtung bekannt, wird dem Endgerät eine Konfigurationsnachricht gesandt. Ist der TAC Code nicht bekannt, kann jetzt hier der erfindungsgemäße Selbstlernprozess einsetzen. Die Konfigurationsrechnereinrichtung versendet Default Settings, die im Endgerät installiert werden. Über die im Anschluss vom Netzwerk ausgesandte WAP Push Message wird der Rückkanal überprüft.
b. Über die Web GUI des CP Servers, durch den User oder Customer Care:
   Der User oder der CC Agent loggen sich über die WEB GUI der Konfigurationsrechnereinrichtung ein und fordern über diese WEB GUI für ihr Gerät die Settings an. Ist der TAC Code nicht bekannt, kann jetzt hier der erfindungsgemäße Selbstlernprozess einsetzen.
c. Per SMS durch das Endgerät:
   Das Endgerät sendet eine SMS mit Gerätetyp und dem gewünschten Profil an den LargeAccount der Konfigurationsrechnereinrichtung und erhält, wenn das Gerät dem Server bekannt ist, die angeforderten Settings zugesandt. Ist der TAC Code nicht bekannt, kann jetzt hier der erfindungsgemäße Selbstlernprozess einsetzen.

Ein Feedback über den erfolgreichen Zugriff auf einen Netzbetreiber Datendienst kann beispielsweise vom WAP-Gateway an den OMA CP Server weitergereicht werden. Mit Hilfe des Gerätenamens aus dem User Agent lässt sich das erfolgreich verwendete XML-Template als Profil unter dem Gerätenamen anlegen.

Gemäß dem zweiten Aspekt der Erfindung wird eine Konfigurationsrechnereinrichtung, die einem Netzwerk, insbesondere einem Kommunikationsnetzwerk zugeordnet ist, bereitgestellt, wobei in der Konfigurationsrechnereinrichtung Konfigurationsdaten von dem Netzwerk zugeordneten Endgeräten abgespeichert sind. Die Konfigurationsrechnereinrichtung ist dadurch gekennzeichnet, dass die Konfigurationsrechnereinrichtung als selbstlernende Konfigurationsrechnereinrichtung ausgebildet ist, dass die Konfigurationsrechnereinrichtung eine Schnittstelle zu dem Netzwerk zugeordneten, unbekannten Endgeräten aufweist, über die Default-Konfigurationsdaten von der Konfigurationsrechnereinrichtung an ein dem Netzwerk zugeordnetes, unbekanntes Endgerät übertragen werden oder übertragbar sind, wobei die Default-Konfigurationsdaten insbesondere in Form eines OMA CP Settings, insbesondere in Form eines XML-Files übertragen werden oder übertragbar sind; dass die Konfigurationsrechnereinrichtung eine Schnittstelle zu einem Rückkanal, der zwischen der Konfigurationsrechnereinrichtung und dem zum zu konfigurierenden Endgerät aufgebaut wird, aufweist, wobei die Schnittstelle insbesondere als Schnittstelle zu einem Rückkanal, der auf Basis der WAP-Push-Technologie ausgebildet ist, ausgebildet ist, dass die Konfigurationsrechnereinrichtung eine Überprüfungseinrichtung oder eine Schnittstelle zu einer Überprüfungseinrichtung aufweist, in der in einem Überprüfungsschritt geprüft wird, ob die an das Endgerät übertragenen Konfigurationsdaten für das Endgerät geeignet sind; und dass die Konfigurationsrechnereinrichtung eine Speichereinrichtung aufweist, in der bei erfolgreicher Überprüfung Konfigurationsdaten mit das zu konfigurierende Endgerät charakterisierenden Informationen abgespeichert werden oder abspeicherbar sind, insbesondere in Form eines XML-Templates.

Bevorzugt weist die Konfigurationsrechnereinrichtung Mittel zur Durchführung des erfindungsgemäßen Verfahrens auf, so dass bezüglich der Ausgestaltung und Funktionsweise der Konfigurationsrechnereinrichtung vollinhaltlich auf die gesamten vorstehenden Ausführungen zum erfindungsgemäßen Verfahren Bezug genommen und verwiesen wird.

Die vorliegende Erfindung besteht insbesondere darin, WAP Push als Rückkanal zur E2E Überprüfung einer zuvor via OMA CP erfolgten Provisionierung zu verwenden. Die dadurch gewonnenen Informationen können verwendet werden, die Zahl der vom OMA CP Server unterstützten Endgeräte kontinuierlich zu erweitern, ohne das die Geräte dem Betreiber des CP Servers vorliegen müssen.

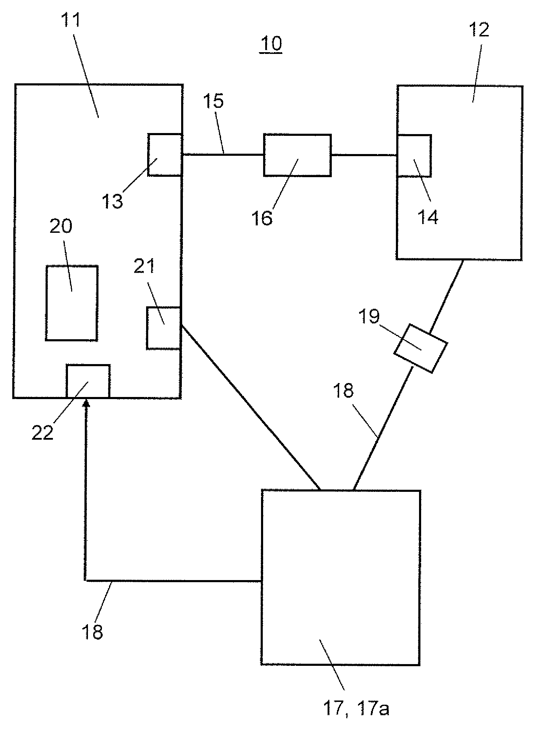

Die Erfindung wird nun anhand eines Ausführungsbeispiels unter Bezugnahme auf die beiliegende Zeichnung näher beschreiben. Es zeigt die einzige Figur in schematischer Ansicht ein Netzwerk, in dem das erfindungsgemäße Verfahren abläuft.

Bei dem Netzwerk 10 handelt es sich um ein Kommunikationsnetzwerk, beispielsweise in Mobilfunknetzwerk. Dem Netzwerk 10 ist eine Konfigurationsrechnereinrichtung 11 zugeordnet. Ebenso sind dem Netzwerk 10 Endgeräte 12, beispielsweise mobile Endgeräte in Form von Mobiltelefonen, zugeordnet. Bei den Endgeräten 12 handelt es sich um solche Endgeräte, die dem Netzwerk 10 noch nicht bekannt sind, und die konfiguriert werden sollen.

Die Konfigurationsrechnereinrichtung 11 und das Endgerät 12 verfügen über Schnittstellen 13, 14. Über diese Schnittstellen 13, 14 und eine Datenverbindung 15 können Default-Konfigurationsdaten 16 vom Endgerät 12 angefordert und von der Konfigurationsrechnereinrichtung 11 zum Endgerät 12 übertragen werden. Die Default-Konfigurationsdaten 16 werden bevorzugt in Form eines OMA CP Settings, insbesondere in Form eines XML-Files, übertragen. Im Endgerät 12 werden die Konfigurationsdaten implementiert, wodurch das Endgerät 12 provisioniert wird.

Erfindungsgemäß besteht nunmehr die Möglichkeit, über einen auf WAP-Push-Technologie basierenden Rückkanal 18 eine Verbindung den Erfolg der Provisionierung zu überprüfen, Hierzu verfügt die Konfigurationsrechnereinrichtung 11 über eine entsprechende Schnittstelle 21 zu dem Rückkanal 18. Im vorliegenden Ausführungsbeispiel wird eine Prüfdatei 19 in Form einer MMS von der Konfigurationsrechnereinrichtung 11 via WAP-Push mittels des Rückkanals 18 auf das Endgerät 12 übertragen.

Die Überprüfung erfolgt dabei im Netzwerk 10, beispielsweise in einer Überprüfungseinrichtung 17, bei der es sich bevorzugt um ein WAP-Gateway 17a handelt. Das Ergebnis wird vom Netzwerk 10 erfasst und mittels des Rückkanals 18 an die Konfigurationsrechnereinrichtung 11 übertragen. Hierzu verfügt die Konfigurationsrechnereinrichtung 11 über eine entsprechende Schnittstelle 22 zu der Überprüfungseinrichtung.

In der Konfigurationsrechnereinrichtung 11 wird das Ergebnis, das in Form von Konfigurationsdaten als XML-File vorliegt, mit das Endgerät 12 charakterisierenden Informationen, beispielsweise dem TAC-Code verknüpft in einer Speichereinrichtung 20 abgespeichert. In diesem Selbstlernprozess wird die Konfigurationsrechnereinrichtung 11 somit kontinuierlich erweitert, ohne dass das Endgerät 12 dem Betreiber der Konfigurationsrechnereinrichtung 11 bekannt sein muss.

### Bezugszeichenliste

- 10: Netzwerk (Kommunikationsnetzwerk)
- 11: Konfigurationsrechnereinrichtung (Server)
- 12: Endgerät (mobiles Endgerät)
- 13: Schnittstelle Konfigurationsrechnereinrichtung zum Endgerät
- 14: Schnittstelle Endgerät zur Konfigurationsrechnereinrichtung
- 15: Datenleitung
- 16: Default-Konfigurationsdaten
- 17: Überprüfungseinrichtung
- 17a: WAP-Gateway
- 18: Rückkanal
- 19: Prüfdatei
- 20: Speichereinrichtung
- 21: Schnittstelle zum Rückkanal
- 22: Schnittstelle zur Überprüfungseinrichtung

## Patentansprüche

1. Verfahren zum selbstlernenden Pflegen eines einem Netzwerk (10), insbesondere einem Kommunikationsnetzwerk, zugeordneten OMA CP Server (11), wobei über den OMA CP Server (11) dem Netzwerk (10) zugeordnete Endgeräte (12) konfiguriert werden, indem von dem OMA CP Server (11) Konfigurationsdaten an die dem Netzwerk (10) zugeordneten Endgeräte (12) übertragen werden,
**dadurch gekennzeichnet,**
**dass** Default-Konfigurationsdaten (16) von dem OMA CP Server (11) an ein dem Netzwerk (10) zugeordnetes, unbekanntes Endgerät (12) übertragen werden, wobei die Default-Konfigurationsdaten (16) insbesondere in Form eines OMA CP Settings, insbesondere in Form eines XML-Files, übertragen werden;
**dass** ein Rückkanal (18), insbesondere via WAP-Push, zwischen dem OMA CP Server (11) und dem zum zu konfigurierenden unbekannten Endgerät (12) aufgebaut wird;
**dass** in einem Überprüfungsschritt geprüft wird, ob die an das unbekannte Endgerät (12) übertragenen Default-Konfigurationsdaten (16) für das unbekannte Endgerät (12) geeignet sind; und
**dass** im Falle, dass die im Überprüfungsschritt durchgeführte Überprüfung erfolgreich ist, die Default-Konfigurationsdaten (16) mit das zu konfigurierende unbekannte Endgerät (12) charakterisierenden Informationen, insbesondere in Form eines XML-Templates, an den OMA CP Server (11) weitergegeben und im OMA CP Server (11) abgespeichert werden.

2. Verfahren nach Anspruch 1, **dadurch gekennzeichnet, dass** dieses zum Erweitern des OMA CP Servers (11) um Konfigurationsdaten von dem Netzwerk (10) unbekannten Endgeräten (12) ausgebildet ist.

3. Verfahren nach Anspruch 1 oder 2, **dadurch gekennzeichnet, dass** im Falle, dass die im Überprüfungsschritt durchgeführte Überprüfung erfolgreich ist, die Default-Konfigurationsdaten (16) mit dem TAC-Code des zu konfigurierenden unbekannten Endgeräts (12) in dem OMA CP Server (11) abgespeichert werden.

4. Verfahren nach einem der Ansprüche 1 bis 3, **dadurch gekennzeichnet, dass** die auf das unbekannte Endgerät (12) übertragenen Default-Konfigurationsdaten (16) mittels OMA Client Provisioning in dem unbekannten Endgerät (12) installiert werden.

5. Verfahren nach einem der Ansprüche 1 bis 4, **dadurch gekennzeichnet, dass** der Rückkanal (18) von Seiten des OMA CP Servers (11) zum unbekannten Endgerät (12) initiiert wird.

6. Verfahren nach einem der Ansprüche 1 bis 5, **dadurch gekennzeichnet, dass** in dem Überprüfungsschritt die End-to-End-Funktionalität geprüft wird und/oder dass geprüft wird, ob die in dem unbekannten Endgerät (12) implementierten Default-Konfigurationsdaten (16) eine Datenverbindung erfolgreich öffnen und/oder dass netzwerkseitig geprüft wird, ob ein Dienst erreichbar ist und/oder dass geprüft wird, ob ein Kontext geöffnet werden kann und/oder ein Zugriff auf erforderliche Netzwerkelemente erfolgreich ist und/oder ob ein Download erfolgreich ist.

7. Verfahren nach einem der Ansprüche 1 bis 6, **dadurch gekennzeichnet, dass** während des Überprüfungsschritts der OMA CP Server (11) eine Prüfdatei (19) an das zu konfigurierende unbekannte Endgerät (12) überträgt.

8. Verfahren nach einem der Ansprüche 1 bis 7, **dadurch gekennzeichnet, dass** der Überprüfungsschritt netzwerkseitig in einer Überprüfungseinrichtung (17, 17a) außerhalb des OMA CP Servers (11) durchgeführt wird und dass im Falle, dass die im Überprüfungsschritt durchgeführte Überprüfung erfolgreich ist, die Ergebnisse der Überprüfung an den OMA CP Server (11) übertragen werden.

9. Verfahren nach Anspruch 8, **dadurch gekennzeichnet, dass** der Überprüfungsschritt an/in einem dem Netzwerk (10) zugeordneten WAP-Gateway (17a) oder einem dem Netzwerk zugeordneten Server durchgeführt wird.

10. Verfahren nach einem der Ansprüche 1 bis 7, **dadurch gekennzeichnet, dass** der Überprüfungsschritt in dem OMA CP Server (11) durchgeführt wird.

11. Verfahren nach einem der Ansprüche 1 bis 10, **dadurch gekennzeichnet, dass** zu Beginn des Verfahrens der OMA CP Server (11) eine Anforderung des zu konfigurierenden unbekannten Endgeräts (12) erhält.

12. OMA CP Server (11), der einem Netzwerk (10), insbesondere einem Kommunikationsnetzwerk, zugeordnet ist, wobei in dem OMA CP Server (11) Konfigurationsdaten von dem Netzwerk (10) zugeordneten Endgeräten (12) abgespeichert sind,
**dadurch gekennzeichnet,**
**dass** der OMA CP Server (11) als selbstlernender OMA CP Server (11) ausgebildet ist,
**dass** der OMA CP Server (11) eine Schnittstelle (13) zu dem dem Netzwerk (10) zugeordneten, unbekannten Endgeräten (12) aufweist, dass über die die Schnittstelle (13) Default-Konfigurationsdaten (16) von dem OMA CP Server (11) an ein dem Netzwerk (10) zugeordnetes, unbekanntes Endgerät (12) übertragen werden oder übertragbar sind, wobei die Default-Konfigurationsdaten (16) insbesondere in Form eines OMA CP Settings, insbesondere in Form eines XML-Files, übertragen werden,
**dass** der OMA CP Server (11) eine Schnittstelle (21) zu einem Rückkanal (18) aufweist, der zwischen dem OMA CP Server (11) und dem zum zu konfigurierenden unbekannten Endgerät (12) aufgebaut wird, wobei die Schnittstelle (21) insbesondere als Schnittstelle zu einem Rückkanal (18), der auf Basis der WAP-Push-Technologie ausgebildet ist, ausgebildet ist, dass der OMA CP Server (11) eine Überprüfungseinrichtung (17, 17a) oder eine Schnittstelle (22) zu einer Überprüfungseinrichtung (17, 17a) aufweist, in der in einem Überprüfungsschritt geprüft wird, ob die an das unbekannte Endgerät (12) übertragenen Default-Konfigurationsdaten (16) für das unbekannte Endgerät (12) geeignet sind, und
**dass** der OMA CP Server (11) eine Speichereinrichtung (20) aufweist, in der bei erfolgreicher Überprüfung Konfigurationsdaten mit das zu konfigurierende unbekannte Endgerät (12) charakterisierenden Informationen abgespeichert werden oder abspeicherbar sind, insbesondere in Form eines XML-Templates.

13. OMA CP Server nach Anspruch 12, **dadurch gekennzeichnet, dass** dieser Mittel zur Durchführung des Verfahrens nach einem der Ansprüche 2 bis 11 aufweist.

## Claims

1. A method for the self-learning maintenance of an OMA CP server (11) being associated with a network (10), in particular with a communications network, whereby via said OMA CP server (11) end terminals (12) are configured which are associated with said network (10), by transmitting configuration data from said OMA CP server (11) to said end terminals (12) being associated with said network (10),
**characterized in**
**that** default-configuration data (16) are transmitted from said OMA CP server (11) to an unknown end terminal (12) being associated with said network (10), whereby said default-configuration data are transmitted in the form of an OMA CP setting, in particular in the form of an XML-file;
**that** a return channel (18), in particular via WAP-push, is built up between said OMA CP sever (11) and the unknown end terminal (12) which is to be configured;
**that** it is checked in a checking step, whether those default-configuration data (16) which are transmitted to said unknown end terminal (12) are proper for said unknown end terminal (12); and
**that** in case, that the check being performed during the checking step is successful, the default configuration data (16) together with information characterizing the unknown end terminal (12) to be configured, in particular in the form of an XML-template, being passed to said OMA CP Server (11) and being stored in said OMA CP server (11).

2. The method according to claim 1, **characterized in that** the method is adapted for extending the OMA CP server (11) by configuration data of the end terminal (12) being unknown to said network (10).

3. The method according to claim 1or 2, **characterized in that** in case, that the check being performed during the checking step is successful, the default configuration data (16) are stored in the OMA CP server (11) together with the TAC-code of the unknown end terminal (129 to be configured.

4. The method according to anyone of claims 1 to 3, **characterized in that** the default-configuration data (16) which have been transmitted to said unknown end terminal (12), are installed in the unknown end terminal (12) by means of OMA client provisioning.

5. The method according to anyone of claims 1 to 4, **characterized in that** the return channel (18) is initiated from the side of the OMA CP server (11) to said unknown end terminal (12).

6. The method according to anyone of claims 1 to 5, **characterized in that** the end-to-end functionality is checked during said checking step and/or that it is checked, whether the default-configuration data (16) implemented in said unknown end terminal (12) successfully open a data link and/or that it is checked at the network side, whether a service is reachable and/or that it is checked, whether a context can be opened and/or an access to required network elements is successful and/or whether a download is successful.

7. The method according to anyone of claims 1 to 6, **characterized in that** during the checking step the OMA CP server (11) transmits an audit file (19) to the unknown end terminal (12) to be configured.

8. The method according to anyone of claims 1 to 7, **characterized in that** the checking step is performed on the network side in a checking device (17, 17a) exteriorly of the OMA CP server (11) and that in case that the check being performed during the checking step is successful, the results of said check being transmitted to said OMA CP server (11).

9. The method according to claim 8, **characterized in that** the checking step is performed at/in a WAP-gateway (17a) being associated to said network or a server being associated to said network.

10. The method according to anyone of claims 1 to 7, **characterized in that** the checking step is performed in the OMA CP server (11).

11. The method according to anyone of claims 1 to 10, **characterized in that**, at the beginning of the method, the OMA CP server receives a request of the unknown end terminal (12) to be configured.

12. An OMA CP server (11) being associated with a network (10), in particular with a communications network, whereby configuration data of end terminals (12) being associated with said network (10) are stored in the OMA CP server (11))
**characterized in**
**that** the OMA CP server (11) is adapted as a self-learning OMA CP server (11),
**that** the OMA CP server (11) comprises an interface (13) to the unknown end terminal (12) being associated with said network (10), that via said interface (13) default-configuration data (16) are transmitted or can be transmitted from said OMA CP server (11) to an unknown end terminal (12) being associated with said network (10), whereby said default-configuration data particularly are transmitted in the form of an OMA CP setting, in particular in the form of an XML-file,
**that** the OMA CP server (11) comprises an interface (21) to a return channel (18), which is built up between said OMA CP sever (11) and the unknown end terminal (12) which is to be configured, whereby said interface (21) particularly is provided as an interface to a return channel (18) which is arranged on the basis of the WAP-push technology,
**that** the OMA CP server (11) comprises a checking device (17, 17a) or an interface (22) to a checking device (17, 17a), wherein it is checked during a checking step, whether those default-configuration data (16) which are transmitted to said unknown end terminal (12) are proper for said unknown end terminal (12), and
**that** the OMA CP server (11) comprises a storage device (20), wherein at a successful check, configuration data together with information characterizing the unknown end terminal (12) to be configured are stored or can be stored, in particular in the form of an XML-template.

13. The OMA CP server according to claim 12, **characterized in that** it comprises means for performing the method according to anyone of claims 2 to 11.

## Revendications

1. Procédé servant à entretenir de manière auto-adaptative un serveur OMA CP (11) associé à un réseau (10), en particulier à un réseau de communication, sachant que des terminaux (12) associés au réseau (10) sont configurés par l'intermédiaire du serveur OMA CP (11) en ce que des données de configuration sont transmises par le serveur OMA CP (11) aux terminaux (12) associés au réseau (10),
**caractérisé en ce**
**que** des données de configuration par défaut (16) sont transmises par le serveur OMA CP (11) à un terminal (12) inconnu associé au réseau (10), sachant que les données de configuration par défaut (16) sont transmises en particulier sous la forme d'un paramètre OMA CP, en particulier sous la forme d'un fichier -xml,
en ce qu'une voie de retour (18), en particulier via un message WAP Push, est installée entre le serveur OMA CP (11) et le terminal (12) inconnu à configurer,
en ce qu'on contrôle lors d'une étape de vérification si les données de configuration par défaut (16) transmises au terminal (12) inconnu sont adaptées au terminal (12) inconnu, et
en ce que dans le cas d'une vérification exécutée avec succès lors de l'étape de vérification, les données de configuration par défaut (16) sont transférées au serveur OMA CP (11) avec des informations caractérisant le terminal (12) inconnu à configurer, en particulier sous la forme d'un template -xml et sont enregistrées dans le serveur OMA CP (11).

2. Procédé selon la revendication 1, **caractérisé en ce que** ledit procédé est réalisé afin d'élargir le serveur OMA CP (11) aux données de configuration des terminaux (2) inconnus du réseau (10).

3. Procédé selon la revendication 1 ou 2, **caractérisé en ce que** dans le cas d'une vérification exécutée avec succès lors de l'étape de vérification, les données de configuration par défaut (16) sont enregistrées dans le serveur OMA CP (11) à l'aide du code TAC du terminal (12) inconnu à configurer.

4. Procédé selon l'une quelconque des revendications 1 à 3, **caractérisé en ce que** les données de configuration par défaut (16) transmises sur le terminal (12) inconnu sont installées dans le terminal (12) inconnu au moyen du protocole OMA Client Provisioning.

5. Procédé selon l'une quelconque des revendications 1 à 4, **caractérisé en ce que** la voie de retour (18) est initiée du côté du serveur OMA CP (11) vers le terminal (12) inconnu.

6. Procédé selon l'une quelconque des revendications 1 à 5, **caractérisé en ce que** la fonctionnalité end-to-end est contrôlée lors de l'étape de vérification, et/ou **en ce qu'**on contrôle si les données de configuration par défaut (16) implémentées dans le terminal (12) inconnu ouvrent avec succès une connexion de données, et/ou **en ce qu'**on contrôle du côté du réseau si un service peut être obtenu, et/ou **en ce qu'**on contrôle si un contexte peut être ouvert et/ou si l'accès aux éléments de réseau requis est mené avec succès et/ou si un téléchargement est mené avec succès.

7. Procédé selon l'une quelconque des revendications 1 à 6, **caractérisé en ce que** le serveur OMA CP (11) transmet un fichier de contrôle (19) au terminal (12) inconnu à configurer au cours de l'étape de vérification.

8. Procédé selon l'une quelconque des revendications 1 à 7, **caractérisé en ce que** l'étape de vérification est exécutée côté réseau dans un dispositif de vérification (17, 17a) à l'extérieur du serveur OMA CP (11), et **en ce que** dans le cas de la vérification exécutée avec succès lors de l'étape de vérification, les résultats de la vérification sont transmis au serveur OMA CP (11).

9. Procédé selon la revendication 8, **caractérisé en ce que** l'étape de vérification est exécutée au niveau d'une/dans une passerelle WAP (17a) associée au réseau (10) ou au niveau/dans un serveur associé au réseau.

10. Procédé selon l'une quelconque des revendications 1 à 7, **caractérisé en ce que** l'étape de vérification est exécutée dans le serveur OMA CP (11).

11. Procédé selon l'une quelconque des revendications 1 à 10, **caractérisé en ce qu'**au début du procédé, le serveur OMA CP (11) reçoit une demande du terminal (12) inconnu à configurer.

12. Serveur OMA CP (11), qui est associé à un réseau (10), en particulier à un réseau de communication, sachant que des données de configuration de terminaux (12) associés au réseau (10) sont enregistrées dans le serveur OMA CP (11),
**caractérisé en ce**
**que** le serveur OMA CP (11) est réalisé sous la forme d'un serveur OMA CP (11) auto-adaptatif,
en ce que le serveur OMA CP (11) présente une interface (13) vers les terminaux (12) inconnus associés au réseau (10), par l'intermédiaire de laquelle interface (13) des données de configuration par défaut (16) sont transmises ou peuvent être transmises à un terminal (12) inconnu associé au réseau (10), sachant que les données de configuration par défaut (16) sont transmises en particulier sous la forme d'un paramètre OMA CP, en particulier sous la forme d'un fichier -xml,
en ce que le serveur OMA CP (11) présente une interface (21) vers une voie de retour (18), laquelle est installée entre le serveur OMA CP (11) et le terminal (12) inconnu à configurer, sachant que l'interface (21) est réalisée en particulier sous la forme d'une interface vers une voie de retour (18), qui est réalisée sur la base de la technologie WAP Push,
en ce que le serveur OMA CP (11) présente un dispositif de vérification (17, 17a) ou une interface (22) vers un dispositif de vérification (17a, 17a), dans lequel on contrôle lors d'une étape de vérification si les données de configuration par défaut (16) transmises au terminal (12) inconnu sont adaptées au terminal (12) inconnu, et
en ce que le serveur OMA CP (11) présente un dispositif de stockage (20), dans lequel, en présence d'une vérification menée avec succès, des données de configuration sont enregistrées ou peuvent être enregistrées avec des informations caractérisant le terminal (12) inconnu à configurer, en particulier sous la forme d'un template -xml.

13. Serveur OMA CP selon la revendication 12, **caractérisé en ce que** ce dernier présente des moyens servant à l'exécution du procédé selon l'une quelconque des revendications 2 à 11.
